Europäisches Patentamt

European Patent Office

Office européen des brevets

(11) Publication number: **0 425 005 A2**

# EUROPEAN PATENT APPLICATION

(21) Application number: 90202652.5

(51) Int. Cl.5: **A01G 31/00**

(22) Date of filing: 04.10.90

(30) Priority: 05.10.89 NL 8902482

(43) Date of publication of application:
02.05.91 Bulletin 91/18

(84) Designated Contracting States:
BE DE DK FR GB NL

(71) Applicant: ROCKWOOL/ GRODAN B.V.
Industrieweg 15
NL-6074 NH Melick-Herkenbosch(NL)

(72) Inventor: De Groot, Jacob Frank
Elmpterweg 14
NL-6042 KK Roermond(NL)
Inventor: Okhuisen, Gert Jan
Richterdeel 31
NL-6045 DJ Roermond(NL)

(74) Representative: Prins, Hendrik Willem et al
Octrooibureau Arnold & Siedsma
Sweelinckplein, 1
NL-2517 GK The Hague(NL)

(54) **Plant culture kit and a plant growth system and a breeding system therefor.**

(57) The invention relates to a plant growth system for plants, comprising:

a) a container (4) provided with a drainage opening (11) closable with a stopper (9);

b) a grow-mat (12) of mineral wool wettable with water arranged with close fitting in said container and provided in its top surface with at least one plant hole (14) intended for receiving a breeding plug (6) provided with a young plant (5); and

c) a fertilizer arranged in said grow-mat, and to a breeding system (2) comprising a container arranged such that a micro-climate for breeding young plants can be maintained; and at least one breeding plug for breeding said young plant, and further to a plant culture kit.

FIG.1

# PLANT CULTURE KIT AND A PLANT GROWTH SYSTEM AND A BREEDING SYSTEM THEREFOR

The present invention relates to a plant culture kit that comprises a breeding system for plants and a plant growth system in which the bred plants grow out and are optionally brought to bloom.

At the present time substrate systems are often used in vegetable and plant culture which contain grow-mats on the basis of mineral wool, such as rockwool, glass wool and the like. It is thus possible to breed and make plants grow out entirely or practically entirely without the use of soil. These substrate systems are employed exclusively on industrial scale since for breeding and growth of the plants apparatus for feed and discharge of water and fertilizers as well as control systems are required. Substrate culture is therefore not or hardly suitable for applications other than plant culture on an industrial basis.

The invention has for its object to provide a plant culture kit whereby substrate culture is made suitable for instance for domestic use, offices, catering establishments and the like, whereby the inherently great advantages of substrate culture become available to the non-breeder and cultivator. It has been found namely that plants bred under substrate culture conditions grow and bloom markedly better, while the often inconvenient use of soil can be dispensed with.

This is achieved according to the invention in that the invention provides a plant culture kit comprising a breeding system enabling the breeding of young plants in breeding plugs; and a plant growth system wherein the young plants that have been bred in a breeding plug can grow out.

The most important component of the plant culture kit is the plant growth system. This plant growth system according to the invention comprises:

a) a container provided with a drainage opening closable with a stopper;

b) a grow-mat of mineral wool wettable with water arranged close fitting in the container and provided in its top surface with at least one plant hole intended for receiving a breeding plug provided with a young plant; and

c) a fertilizer arranged in the grow-mat.

The container and the grow-mat are mutually adapted to one another such that the grow-mat is arranged in the container with close fitting, that is, substantially without any clearance along namely its side surfaces and bottom surface. Prior to arranging of the breeding plug in the grow-mat, the container having the grow-mat therein is completely filled with water, whereby the grow-mat is fully provided with water. The drainage opening is then opened so that the excess water can be removed.

The breeding plug is subsequently inserted into the plant hole. The grow-mat and the breeding plug are mutually adapted to one another in that the breeding plug can be arranged in the plant hole substantially without clearance. This means that the breeding plug can subsequently extract water from the grow-mat and roots of the young plant in the breeding plug can grow out into the grow-mat in order to there take up water and fertilizers.

Fertilizer has to be added to the grow-mat so that subsequent continuous supply of nutrient liquids containing fertilizer can be omitted, and so that in fact an optimal fertilizer concentration is continuously available for the plants growth into the grow-mat.

Some time after placing of the breeding plugs in the grow-mat frequent watering has to be omitted (for example two to three weeks, depending on weather conditions). During this period of relatively small water supply the plant will develop a good root system which will extend substantially through the entire grow-mat to all places where water remains present. As a result of the partial drying up the plant roots will therefore also reach as far as the bottom of the grow-mat. After this first period it can suffice to give water for instance only once a week. Excess is avoided because excess water is directly drained via the unclosed drainage opening.

Appreciation of the plant growth system will be markedly improved for many users if at least the top surface of the grow-mat has a biologically attractive, usually uniform colour. It is therefore advantageous to provide the grow-mat with a colorant, normally a coloured inorganic material, because these materials can be added during manufacture of the grow-mat.

Used as grow-mat is a mineral wool wettable with water which is per se known and is used in large quantities for substrate culture (see for instance the Netherlands patent application 70.17201 and the European patent application 280.338, the content of which is deemed through reference as interpolated herein). Inorganic coloured material is therefore preferred because this material can be added upstream of the curing oven and the coloured material can withstand temperatures up to 250°C without colour loss. Suitable materials are carboniferous materials and metal oxides, such as soot, ferric oxide and manganese oxide. As noted above, the colorant can be applied through the whole of the grow-mat or optionally only in or on the final upper surface of the grow-mat. A suitable manner of adding the colorant comprises the forming of a dispersion of the material in a vaporable liquid, for instance water.

The fertilizer, a necessary component of the grow-mat with regard to the growing out of the plants, may be present in the mat in the form of a composition from which the fertilizer is given off continuously. This composition can be arranged as a capsule in the grow-mat in the vicinity of the plant hole or be incorporated in the grow-mat distributed in a substantially homogeneous manner, in which case the fertilizer can be added during manufacture of the grow-mat.

Compositions available on the market as fertilizer compositions cannot be used. In addition to nitrogen, phosphate and potassium, suitable compositions must contain sufficient quantities of micro-elements such as iron, manganese, zinc, boron and magnesium. The amount of fertilizer introduced with the composition must preferably give off fertilizer to the grow-mat for a period of three to five months.

If in preference the stopper is inseparably connected via a coupling strip to the container, the drainage opening can if desired be closed, for example in the case a new grow-mat is arranged in the container.

For optimal rooting of the young plant in the grow-mat it is of importance that with relatively equal moisture concentrations the grow-mat and breeding plug have the same suction pressure. This means that in conditions of equilibrium the same moisture concentrations prevail in the breeding plug and in the grow-mat. Thus avoided is that on the one hand the grow-mat sucks the breeding plug dry, or on the other hand that the breeding plug draws moisture out of the surrounding portion of the grow-mat, whereby the roots are insufficiently stimulated to grow out into the grow-mat. It is therefore recommended that the grow-mat and the breeding plug possess substantially the same suction pressure characteristic. This is realized in practice by manufacturing the breeding plug and the grow-mat substantially of the same material, i.e. mineral wool such as rockwool and glass wool. In preference a rockwool is used with a density of 30 to 100 kg/m³, and more preferably 40 to 60 kg/m³, for instance 45 kg/m³.

The suction pressure characteristic of the grow mat and/or breeding plug may be adjusted optimally to substrates of the potting soil type by adding to the mineral wool a soil type, particularly clay, preferably heavy clay. An optimal grow mat and/or breeding plug is formed when to the mineral wool about 10-50% by wt. dried, sieved clay is added. Preferably, 20-40% by wt., more preferably 25-30% by wt. clay is added.

The clay is preferably added during the manufacture of the grow mat or breeding plug.

An important advantage of the plant growth system is that such plant growth systems can be marketed via stores and supermarkets without the drawback occurring of contamination with plant diseases and/or of the use of large quantities of soil that is comparatively heavy and difficult to lift, which can result in soiling. A container provided with a grow-mat is relatively light, does not display the above described drawback of soiling and can be supplied in attractive packagings. A filling in the form of the grow-mat alone can also be supplied to the consumer in an attractive manner. Finally, there is the advantage that comparatively little weed development will occur.

Another aspect of the invention relates to the breeding system. This breeding system comprises a container having arranged therein at least one breeding plug for breeding the young plant. This breeding plug can be provided with either a seedling or cutting, or a seed out of which the plant can grow. It is important that the container is contrived such that for some time a so-called micro-climate can be generated in the container, whereby germinating and breeding conditions can be maintained, such as a relative humidity above approximately 80%, preferably 90%, and a germinating temperature of about 20° C.

Although in principle these breeding processes will be performed by a market gardener, these breeding activities can also be left to the consumer. The number of breeding plugs in the breeding system is geared to the plant growth system. The number of breeding plugs can on the one hand be equal to the number of plant holes in the grow-mat of the plant growth system, but it is possible on the other hand to arrange a smaller number of breeding plugs in the breeding system so that some variation in the type or variety of plants can be introduced by the consumer. In the case that the grow-mat is for instance provided with six plant holes, the breeding system may contain either six or three breeding plugs so that a selection can be made in accordance with variety and for instance colour, but all plant holes can be filled without breeding plugs being left over.

Mentioned and other features of the plant culture kit, the breeding system and the plant growth system according to the invention will be elucidated hereinafter with reference to the annexed drawings.

In the drawings:

figure 1 shows a partly exploded, perspective view of the plant culture kit according to the invention;

figure 2 is a section along the line II-II from figure 1;

figure 3 shows in perspective view another breeding system for use in the plant culture kit according to the invention; and

figure 4 is a variant of a grow-mat that is used in the plant growth system according to the invention.

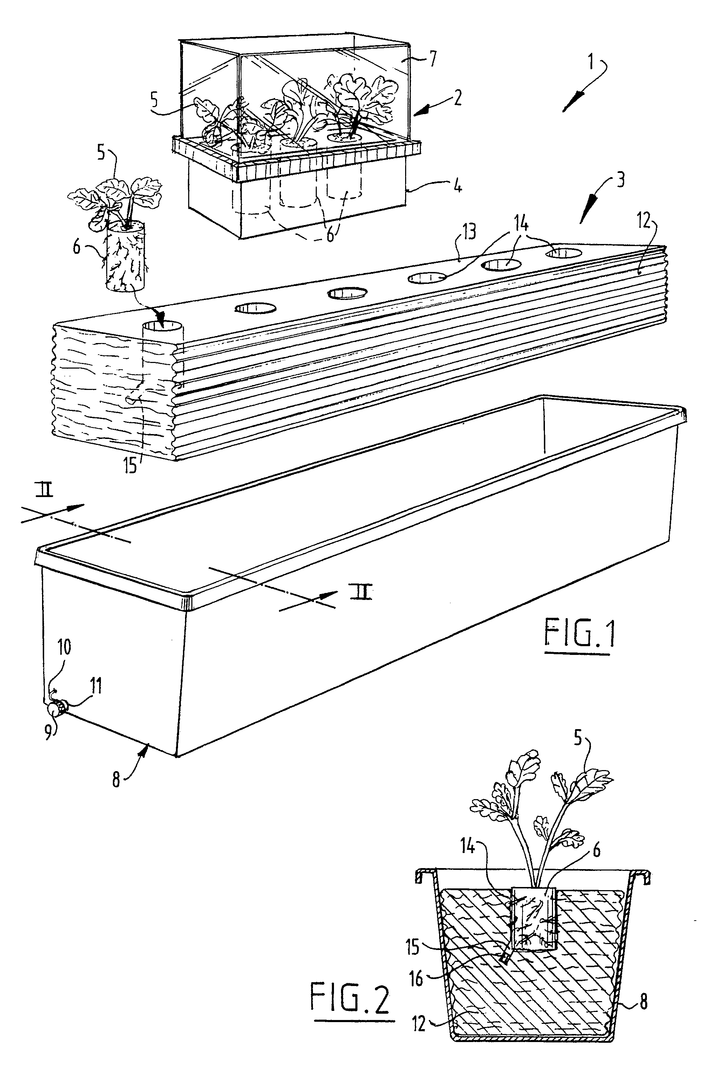

Figure 1 shows the plant culture kit according to the invention comprising a breeding system 2 and a plant growth system 3.

The breeding system 2 comprises a container 4 which is provided with three breeding plugs 6 provided with young plants 5. The container 4 is closed off with a transparent cover 7, whereby the micro-climate can be established in the breeding system.

The plant growth system 3 according to the invention comprises a container 8 having a substantially open box form or plant box shape. The container is provided close to its bottom with a stopper 9 which is fixed inseparably via a coupling strip 10 to the container 8. A drainage opening 11 can be closed off with the stopper 9. A grow-mat 12 of mineral wool wettable with water, such as rockwool with a density of 45 kg/m$^3$ is arrangeable in close fitting manner in the container 8. An upper surface 13 of the grow-mat 12 is provided with six plant holes 14. The plant holes 14 are geared to the cylindrical breeding plugs 6 in respect of shape and size.

As is shown in more detail in figure 2, a fertilizer composition 16 in the form of a capsule is arranged in a hole 15 slanting to the side of the plant hole 14. After wetting of the grow-mat 12 fertilizer is given off continuously over a period of time from this composition and this becomes available to the plant roots growing through the grow-mat 12.

The height of the grow-mat 12 lies preferably between 8-15 cm, with an optimal height of 9-11 and preferably 10 cm. The length of the grow-mat is adaptable to for instance window width, and varies between 40 and for instance 120 cm. The height of the container 8 is 2 to 3 cm higher than the height of grow-mat 12. The grow-mat 12 can thus be entirely wetted with water in simple manner by filling the container 8, and the excess water can subsequently be discharged via the drainage plug.

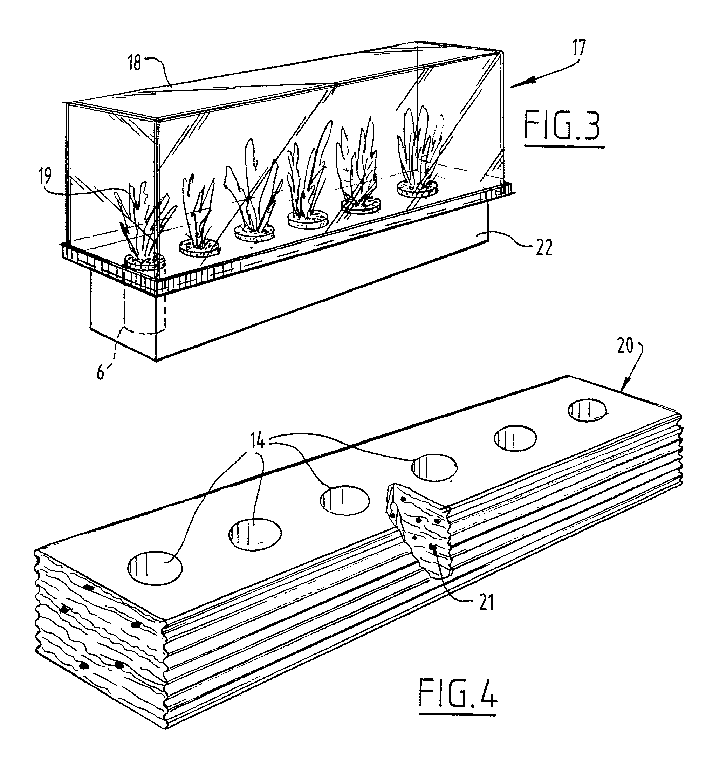

Figure 3 shows another breeding system 17, once again comprising a container 22 and a transparent cover 18. Present in this case are six plants 19 arranged in breeding plugs 6.

Finally, figure 4 shows another grow-mat 20 according to the invention in which are arranged fertilizer pellets 21 and 25% by wt. sieved clay, both distributed in substantially homogeneous manner.

The plant growth system 3 according to the invention is particularly suitable as plant box for decorating houses, balconies, garden partitions, terrace partitions and the like. As a result of the relatively easy and not very critical water and fertilizer supply an attractive system is provided for the non-market gardener, whereby the advantages of substrate culture can be optimally utilized.

## Claims

1. Plant growth system for plants, comprising:
   a) a container provided with a drainage opening closable with a stopper;
   b) a grow-mat of mineral wool wettable with water arranged with close fitting in said container and provided in its top surface with at least one plant hole intended for receiving a breeding plug provided with a young plant; and
   c) a fertilizer arranged in said grow-mat.

2. Plant growth system as claimed in claim 1, wherein the grow-mat is provided with a colorant.

3. Plant growth system as claimed in claim 2, wherein the colorant comprises a coloured inorganic material.

4. Plant growth system as claimed in claim 3, wherein the inorganic material comprises soot, ferric oxide, manganese oxide.

5. Plant growth system as claimed in claims 3-4, wherein the colorant is added during manufacture of the grow-mat as a dispersion of the inorganic material.

6. Plant growth system as claimed in claims 1-5, wherein the fertilizer is arranged in a composition continuously giving off fertilizer.

7. Plant growth system as claimed in claim 6, wherein the fertilizer is arranged in the grow-mat in the vicinity of the plant hole.

8. Plant growth system as claimed in claim 6, wherein the fertilizer is arranged distributed through the grow-mat.

9. Plant growth system as claimed in claims 1-8, wherein the stopper is connected inseparably via a coupling strip to the container.

10. Plant growth system as claimed in claims 1-9, wherein the breeding plug comprises a material having substantially the same suction pressure characteristic as that of the grow-mat.

11. Plant growth system as claimed in claim 1-10, wherein the grow mat and/or the breeding plug comprise clay.

12. Plant growth system according to claim 11, wherein the amount of clay is 10-50% by wt., preferably 20-40% by wt., more preferably 25-30% by wt.

13. Breeding system comprising a container arranged such that a micro-climate for breeding young plants can be maintained; and at least one breeding plug for breeding said young plant.

14. Breeding system as claimed in claim 13, wherein the number of breeding plugs is equal to or a proportion of the number of plant holes of the grow-mat of the plant growth system.

15. Plant culture kit comprising:
   a) a breeding system as claimed in claim 13 or 14; and
   b) a plant growth system as claimed in claims 1-12.

FIG.1

FIG.2

FIG.3

FIG.4